# EUROPEAN PATENT APPLICATION

(11) **EP 4 414 337 A1**
(43) Date of publication of application: **14.08.2024**
(21) Application number: 23382106.5
(22) Date of filing: 07.02.2023
(51) Int. Cl.: C04B 14/38, C04B 28/04, C04B 20/10

(54) **ULTRA-HIGH PERFORMANCE FIBER REINFORCED GROUT**

(71) Applicant: Sika Technology AG, 6340 Baar (CH)
(72) Inventor: CALAMA, Juan Antonio, 27007 Salamanca (ES)
(74) Representative: Sika Patent Attorneys

(57) **Abstract**

A dry cementitious composition comprising, relative to the total dry weight of the cementitious composition, a) 4 to 80 wt.-% of cementitious binder, preferably Ordinary Portland Cement, b) 5 to 95 wt.-% of aggregates, wherein the aggregates have a grain size in the range of 0.001 mm to 8 mm, c) 0.005 to 5 wt.-% of carbon fibers provided with a sizing, preferably a polymer sizing, and/or in form of carbon fiber reinforced polymer lamellas.

A preferred application of the cementitious compositions is grouting of wind turbine towers offshore or onshore. The invention also concerns the use of carbon fibers for the preparation of Ultra-High-Performance Fiber-Reinforced Grout (UHPFRG) or Ultra-High-Performance Fiber-Reinforced Concrete (UHPFRC).

## Description

### Technical field

The present invention relates to a dry cementitious composition comprising cementitious binder, aggregates, and specific carbon fibers, which is suitable for the preparation of Ultra-High-Performance Fiber-Reinforced Grout (UHPFRG) or Ultra-High-Performance Fiber-Reinforced Concrete (UHPFRC). The present invention also relates to the use of the specific carbon fibers as a reinforcement for UHPFRG or UHPFRC.

### Background of the invention

Cementitious materials are generally used for concretes or grouts, which usually also contain aggregates and additives. For use, the cementitious composition is mixed with water so that a reaction takes place between the cement and the water, commonly referred to as hydration. After hydration, the cement hardens and forms a solid building material.

In recent years, special concretes such as high-performance concrete (HPC) and ultra-high performance concrete (UHPC) as well as high-performance and ultra-high-performance grouts (UHPG) have been introduced to the market.

These special concretes and mortars typically contain a high proportion of mineral binder and a high proportion of aggregates with a fine grain size. The high proportion of fines results in good homogeneity of the materials, and the high proportion of mineral binder results in high strength.

High-strength concretes and grouts also contain little to very little water, since the water not needed for cement hydration evaporates, leaving pores that reduce strength. For normal concrete, the w/c ratio, i.e. the mass ratio of water to cement, is usually between 0.45 and 0.60. For HPC and UHPC, the w/c ratio is much lower, less than 0.40 and often less than 0.30 or 0.25.

However, UHPG and UHPC also exhibit certain disadvantages, such as low tensile strength and low resistance to crack opening and propagation. To meet these challenges, fiber reinforced systems were developed which are called ultra-high performance fiber-reinforced concrete (UHPFRC) and ultra-high performance fiber-reinforced grouts (UHPFRG), respectively.

Steel fibers are commonly used fibers in these systems, resulting in higher peak load and ductile behavior under compressive loading. However, the incorporation of steel fibers has some disadvantages, such as high corrosion potential and high density. Moreover, UHPFRG and UHPFRC with steel fibers show bad flowability and weak self-consolidation.

Other types of fibers are also used for fiber reinforcement, but the properties achieved are often not satisfactory.

### Summary of the invention

The objective of the present invention is to provide a dry cementitious composition suitable for UHPFRC and UHPFRG that overcomes the drawbacks of the prior art. In particular, the object of the present invention is to provide a dry cementitious composition suitable for UHPFRC and UHPFRG that exhibits high final flexural strength and compressive strength as well as improved fatigue behavior and modulus of elasticity and at the same time reducing the weight of the fibers used therein.

Surprisingly, this object could be achieved by a dry cementitious composition containing specific aggregates in combination with specific carbon fibers.

Accordingly, the present invention is directed to a dry cementitious composition comprising, relative to the total dry weight of the cementitious composition,
a) 4 to 80 wt.-%, preferably 10 to 60 wt.-%, particularly preferably 15 to 50 wt.-% of cementitious binder, preferably Ordinary Portland Cement,
b) 5 to 95 wt.-% , preferably 20 to 80 wt.-%, particularly preferably 30 to 70 wt.-% of aggregates, wherein the aggregates have a grain size in the range of 0.001 mm to 8 mm, as determined by sieve analysis according to EN 12192-1:2002 or EN 933-1:2012,
c) 0.005 to 5 wt.-%, preferably 0.01 to 4 wt.-%, particularly preferably 0.1 to 3 wt.-% of carbon fibers provided with a sizing, preferably polymer sizing, and/or in form of carbon fiber reinforced polymer lamellas.

Surprisingly, it has been found that the dry cementitious compositions of the invention can provide cements or grouts with increased flexural/compressive strengths, E-Modulus in compression as well as fatigue behavior.

Thus, the use of the specific carbon fibers, in particular micro carbon fibers, in the inventive compositions enhances final strengths, E-Modulus and fatigue resistance for ultra-high performance fiber reinforced grouts (UHP-FRG) or ultra-high performance fiber reinforced concrete (UHP-FRC).

Further advantages of the present invention are low tendency for autogenous shrinkage, good flowability and self-consolidating properties of the inventive compositions during processing.

At the same time, the low density of the carbon fibers allows for lower dead loads of the components and limited corrosion compared to steel fibers. This improves the resistance to harsh conditions such as seawater or environments with high chloride environments.

Further embodiments of the invention are described in other independent claims. Preferred embodiments of the invention are described in the dependent claims.

### Detailed description of the invention

In a first aspect, the present invention is directed to a dry cementitious composition comprising, relative to the total dry weight of the cementitious composition,
a) 4 to 80 wt.-% of cementitious binder, especially Ordinary Portland Cement,
b) 5 to 95 wt.-% of aggregates, wherein the aggregates have a grain size in the range of 0.001 mm to 8 mm, as determined by sieve analysis according to EN 12192-1:2002 or EN 933-1:2012,
c) 0.005 to 5 wt.-% of carbon fibers provided with a sizing, preferably polymer sizing, and/or in form of carbon fiber reinforced polymer lamellas.

In a preferred embodiment, the dry cementitious composition comprises, relative to the total dry weight of the cementitious composition,
a) 10 to 60 wt.-%, preferably 15 to 50 wt.-%, of the cementitious binder,
b) 20 to 80 wt.-%, preferably 30 to 70 wt.%, of the aggregates, and
c) 0.01 to 4 wt.-%, preferably 0.1 to 3 wt.%, of the carbon fibers.

A dry cementitious composition of the invention comprises a cementitious binder which may also be a combination of different cementitious binders. A cementitious binder is in particular a material, which reacts in the presence of water in a hydration reaction to form solid hydrates or hydrate phases. This can be in particular a hydraulic binder which can be hardened with water even under water, such as in particular cement, or a latent hydraulic binder which sets with water, such as in particular granulated blast furnace slag and calcined clay, or a pozzolanic binder, such as in particular fly ash, silica fume, micro silica, or a mixture thereof.

Within the present context, the cementitious composition of the invention preferably does not comprise any reactive polymer or polymer resin. In particular, the cementitious composition is preferably free of epoxy resins.

The dry cementitious composition has typically a content of water of not more than 10 wt.-%, preferably not more than 3 wt.-%, especially not more than 1 wt.-%, in each case relative to the total weight of the dry cementitious composition. The dry cementitious composition is usually a powdered cementitious composition.

The cementitious binder of the dry cementitious composition of the present invention preferably comprises or is Ordinary Portland Cement (OPC).

In a preferred embodiment, the content of OPC in a cementitious composition of the present invention is in the range of 4 to 80 wt.-% preferably 26 to 75 wt.-%, especially 30 to 66 wt.-%, in each case relative to the total dry weight of the cementitious composition.

A suitable OPC is, for example, classified as CEM I under standard DIN 197-1. However, other OPC classified, for example, under the relevant ASTM, JIS or Chinese standards is also suitable.

It is also possible to use blended cements as cementitious binder such as Portland composite cement (CEM II), blast furnace cement (CEM III), pozzolanic cement (CEM IV) and composite cement (CEM V) according to DIN 197-1 instead of OPC.

It is further possible to use special cements, such as calcium sulfoaluminate cement, calcium aluminate cement, or mixtures thereof in addition to the OPC as the cementitious binder.

In a preferred embodiment, the OPC is a CEM I. According to further embodiments, the OPC is a white cement. White cements can be preferred within the present context as they have a lower water demand. According to preferred embodiments, the cementitious binder, especially the OPC, has a low content of tricalcium aluminate (C3A). A low content means that the content of C3A in the cementitious binder of the present invention is preferably <10 wt.-%, more preferably <5 wt.-%, each based on the total dry weight of the cementitious binder.

The cementitious binder of the dry cementitious composition of the present invention may also comprise latent hydraulic binders and/or pozzolanic binders. Suitable latent hydraulic and/or pozzolanic binders are in particular granulated blast furnace slag, calcined clay, fly ash, silica fume and/or micro silica.

According to embodiments, the cementitious binder comprises latent hydraulic and/or pozzolanic binders in the range of 1 to 65 wt.-%, preferably 5 to 35 wt.-%, more preferably 10 to 20 wt.-%, in each case relative to the total dry weight of the cementitious binder. Advantageous latent hydraulic and/or pozzolanic binders are granulated blast furnace slag, calcined clay, fly ash, silica fume and/or micro silica.

In a preferred embodiment, the cementitious binder consists to 100 wt.-% of Ordinary Portland Cement.

A suitable cementitious binder may also comprise or consist of, in each case relative to the total dry weight of the cementitious binder,
a) at least 35 wt.-%, preferably at least 65 wt.-%, and most preferably at least 80 wt.-% of Ordinary Portland Cement,
b) 1 to 65 wt.-%, preferably 5 to 35 wt.-%, more preferably 10 to 20 wt.-% of at least one latent hydraulic and/or pozzolanic binder.

The at least one latent hydraulic and/or pozzolanic binder is preferably selected from granulated blast furnace slag, calcined clay, fly ash, silica fume and/or micro silica.

The dry cementitious composition according to the invention comprises 4 to 80 wt.-%, preferably 10 to 60 wt.-%, and more preferably 15 to 50 wt.-%, of the cementitious binder, relative to the total dry weight of the cementitious composition.

The dry cementitious composition according to the invention further comprises aggregates, wherein the aggregates have a grain size in the range of 0.001 mm to 8 mm, as determined by sieve analysis according to EN 12192-1:2002 and/or EN 933-1:2012.

The aggregates are preferably selected from at least one of limestone, granite, basalt, olivine, aluminum oxide, sand or a combination thereof, preferably sand and/or aluminum oxide.

The dry cementitious composition contains, relative to the total dry weight of the cementitious composition, 5 to 95 wt.-%, preferably 20 to 80 wt.-%, preferably 30 to 70 wt.%, of the aggregates, wherein the aggregates are preferably selected from at least one of limestone, granite, basalt, olivine, aluminum oxide and sand, preferably aluminum oxide and/or sand.

According to the invention, aggregates are used as a powder. Said aggregates can thus be characterized by a grain size distribution. The grain size can be analyzed by sieve analysis as described for example in EN 12192-1:2002 or EN 933-1:2012. The process separates fine particles from coarser particles by passing the material through a number of sieves of different mesh sizes. The material to be analyzed is vibrated through a series of sequentially decreasing sieves using a single, or combination of horizontal, vertical or rotational motion. In case of particles with a grain size below 75 µm, the wet method of EN 933-1:2012 is used.

A lower end of a grain size distribution can then be given by the mesh size of a sieve retaining 100% of the particles and an upper end can be given by the smallest mesh size of a sieve through which 100% of the particles still pass. In the following the mesh size and thus the lower and upper end of a grain size distribution is given in mm.

The aggregates, preferably selected from at least one of limestone, granite, basalt, olivine, aluminum oxide and sand, preferably have a grain size as determined by sieve analysis according to EN 12192-1:2002 or EN 933-1:2012 in the range of 0.036 mm to 7 mm, preferably 0.125 mm to 6 mm, more preferably 0.25 mm to 3 mm.

Common aggregates are described for example in EN 12620:2008-07 and EN 13139:2015-07.

Sand is a naturally occurring granular material composed of finely divided rock or mineral particles. Examples for sand are river sand and/or manufactured sand, for example from granite or limestone, or mixtures thereof. The sand is preferably silica sand or quartz sand. Suitable sands are described in standards ASTM C778 or EN 196-1.

Aluminum oxide within the present context refers to materials with a content of Al₂O₃ of at least 5 wt.-%, preferably at least 50 wt.-%, more preferably at least 75 wt.-%, still more preferably at least 85 wt.-%, and especially at least 90 wt.%, in each case relative to the total dry weight of the material. Aluminum oxide of the present invention typically further contains SiO₂, Fe₂O₃, TiO₂, and/or oxides of alkali metals and alkaline earth metals. Preferred aluminum oxides are alumina, especially α-alumina, which can be calcined. Further preferred materials are calcined bauxites.

Aluminum oxide, within the present context, does not relate to aluminates or alumosilicates. Aluminum oxide is thus not aluminate cement or any aluminosilicates. Aluminum oxide, within the present context, does not relate to fibrous alumina. Aluminum oxide within the present context does preferably also not relate to aluminum oxide based nano-materials.

When aluminum oxide is used as the aggregate, it is particularly preferred that the aluminum oxide is characterized by a bimodal grain size distribution. Such a bimodal grain size distribution may result from mixing of two types of aluminum oxide with different grain size distribution. It is thus preferred that the aluminum oxide used in a cementitious composition of the present invention is a mixture of two aluminum oxides with different grain size distribution.

Without wishing to be bound by theory, it is believed that aluminum oxide has a porous structure that enables water from the cement paste to absorb to the aluminum oxide. Absorbed water is kept inside the aluminum oxide during cement hydration and thus the autogenous shrinkage is significantly reduced over the hydration period. The free water kept inside the aluminum oxide will finally diffuse into the cement matrix and react with unreacted cement after the final setting leading to a stronger connection of the aluminum oxide to the cement matrix.

The dry cementitious composition further contains carbon fibers. The carbon fibers are provided with a sizing, preferably polymer sizing, and/or are carbon fibers in form of carbon fiber reinforced polymer lamellas. The sizing is also beneficial in that it improves the flowability of the wet mix.

The amount of carbon fibers provided with a sizing, preferably polymer sizing, and/or in form of carbon fiber reinforced polymer lamellas in the dry cementitious composition according to the invention is in the range from 0.005 to 5 wt.-% preferably from 0.1 to 4 wt.-%, more preferably from 0.1 to 3 wt.-%, in each case relative to the total dry weight of the dry cementitious composition. The amount indicated refers to the carbon fibers provided with a sizing, preferably polymer sizing, and/or in form of carbon fiber reinforced polymer lamellas, i.e. inclusive the polymer material included.

Carbon fibers provided with a sizing, preferably polymer sizing, carbon fibers in form of carbon fiber reinforced polymer lamellas or a combination thereof can be used.

Such carbon fibers are known to the skilled persons and are commercially available. For instance, carbon fibers provided with a polymer sizing are available in various dimensions and modifications under the trade name Tenax^{®} from Teijin or under the trade name Zoltek^{®} from Toray. Carbon fibers in form of carbon fiber reinforced polymer lamellas are available in various dimensions and modifications under the trade name CarboDur^{®} from Sika.

In one embodiment, the carbon fibers are carbon fibers provided with a sizing, preferably polymer sizing. The sizing or polymer sizing is a usually thin coating applied to the surface of the fibers. In one embodiment, the carbon fibers are carbon fibers in form of carbon fiber reinforced polymer lamellas. In these lamellas, bundles of carbon fibers are embedded or bonded in a polymer matrix. Lamellas usually refer to plate-like structures. The lamellas are typically obtained by pultrusion (pultruded carbon fiber reinforced polymer lamellas).

The following indications with respect to suitable aspects of the carbon fibers applies to both carbon fibers provided with a sizing, preferably polymer sizing and carbon fibers in form of carbon fiber reinforced polymer lamellas.

In a particularly preferred embodiment, the carbon fibers are micro carbon fibers. The term micro carbon fibers is generally used for carbon fibers with a diameter of less than 0.3 mm. It is particularly preferred that the carbon fibers have a diameter in the range of 1 to 100 µm.

It is preferred that the carbon fibers, in particular the micro fibers, have an average length in the range of from 0.001 to 25 mm, preferably from 0.1 to 20 mm, more preferably from 4 to 15 mm, most preferably from 6 to 12 mm. For chopped carbon fibers, the average length usually corresponds to the cut length. In the context of the present application, the average length refers to the number average length.

It is preferred that the carbon fibers, in particular the micro carbon fibers, have an aspect ratio in the range of from 0.005 to 25000, preferably from 0.5 to 20000, more preferably from 20 to 15000, still more preferably from 1000 to 5000. The aspect ratio is defined as the length of a fiber divided by its diameter.

The aspect ratio of carbon fibers in the above preferred ranges results in an improved performance, in particular improved crack performance. Without wishing to be bound to any theory, it is assumed that said preferred aspect ratios results in higher amounts of carbon fibers in a crack plane so that the crack propagation behavior is improved.

It is preferred that the carbon fibers are chopped carbon fibers. It is also possible to use chopped and milled carbon fibers. Chopped carbon fibers of the desired length can be obtained e.g. by cutting carbon fiber filament yarn which is provided with a sizing, preferably polymer sizing, or by cutting carbon fiber reinforced polymer lamellas which are usually supplied in rolls. An advantage of chopped carbon fibers is that the carbon fiber length is very homogenous. In another embodiment, chopped and milled carbon fibers are used.

The sizing is preferably a polymer sizing or organic polymer sizing, respectively. The amount of the sizing, preferably polymer sizing, in the carbon fibers provided with a sizing is preferably in the range of from 0.1 to 10 wt.-%, preferably 0.5 to 5 wt.-%, based on the weight of the fibers.

The amount of polymer in the carbon fiber reinforced polymer lamellas is preferably in the range of from 0.1 to 10 wt.-%, preferably 0.1 to 5 wt.-%, based on the weight of the fibers.

Examples of suitable materials, in particular polymers, for the sizing, preferably polymer sizing, and/or the reinforced polymer are polyvinyl alcohol, polyvinylpyrrolidone (PVP), polyamide (PA), polyacrylate, polydopamine (PDA), 4,4'-diaminodiphenylmethane (MDA), carbon nanotubes, poly(thioarylene phosphine oxide) (PTPO), N-(404-diaminodiphenylmethane)-2-hydroxypropyl methacrylate (DMHM), (3-glycidyloxypropyl)trimethoxysilan (GPTMS), phenoxy polyhydroxyether, polypropylene, polyethylene, epoxy resin, in particular epoxy vinyl ester, carboxymethyl cellulose, polyurethane, vinyl ester resin, or a combination thereof. Preferred polymers are polyvinyl alcohol, polypropylene, polyethylene, epoxy resin, in particular epoxy vinyl ester, carboxymethyl cellulose, polyurethane, vinyl ester resin or a combination thereof. A particularly useful sizing can be obtained from a nonionic, aqueous dispersion of a solid bisphenol A epoxy resin having a molecular weight per epoxide of between 100 and 10000.

The chopped carbon fibers may have a bulk density in the range of 200 to 800 g/L, preferably 300 to 500 g/L.

An advantage of the invention is that the weight of carbon fibers is significantly lower than that of steel fibers which are conventionally used in UHPFRG and UHPFRC. This also allows easier handling. Moreover, carbon fibers are more suitable with respect to safety aspects.

UHPFRG and UHPFRC with steel fibers show bad flowability and weak self-consolidation. By contrast, it has been shown that UHPFRG and UHPFRC prepared with the dry cementitious compositions containing carbon fibers as defined have appropriate flowability and self-consolidating properties.

The carbon fibers provided with a sizing, preferably a polymer sizing, or in form of carbon fiber reinforced polymer lamellas in combination with the aggregates also ensures a concrete or mortar with particularly high compressive strength.

The dry cementitious composition of the invention preferably further comprises fine fillers. Fine filler is non-reactive in the hydration reaction of cementitious binders and has a grain size predominantly passing a 0.125 mm, preferably passing a 0.063 mm sieve. Typical fillers include finely ground rock flour.

Preferably, fillers of different grain sizes are mixed to optimally adjust the properties of the cementitious composition. Such mixtures are known to the person skilled in the art.

A cementitious composition of the present invention advantageously further comprises additives common in the mortar and/or concrete industry such as plasticizers and/or superplasticizers, redispersible polymers, accelerators, retarders, air entrainers, stabilizers, viscosity modifiers, thickeners, water reducers, accelerators, retarders, water resisting agents, strength enhancing additives, blowing agents, pigments, corrosion inhibitors, etc. It can be advantageous to combine two or more of the mentioned additives in one cementitious composition.

According to suitable embodiments, the dry cementitious composition of the invention comprises, relative to the total dry weight of the cementitious composition,
a) 4 to 80 wt.-%, preferably 10 to 60 wt.-%, particularly preferably 15 to 50 wt.-%, of the cementitious binder, preferably Ordinary Portland Cement,
b) 5 to 95 wt.-%, preferably 20 to 80 wt.-%, particularly preferably 30 to 70 wt.-% of aggregates, wherein the aggregates have a grain size in the range of 0.001 mm to 8 mm, preferably 0.036 mm to 7 mm, more preferably 0.125 mm to 6 mm, still more preferably 0.25 mm to 3 mm, as determined by sieve analysis according to EN 12192-1:2002 or EN 933-1:2012,
c) 0.005 to 5 wt.-%, preferably 0.01 to 4 wt.-%, particularly preferably 0.1 to 3 wt.-% of carbon fibers, preferably micro carbon fibers, provided with a sizing, preferably a polymer sizing, or in form of carbon fiber reinforced polymer lamellas.
d) optionally further fine aggregates or fillers,
e) optionally further additives.

The dry cementitious composition according to the invention is preferably a grout composition or a concrete composition, in particular a grout composition. In a preferred embodiment, the dry cementitious composition according to the invention is a cementitious composition suitable for Ultra-High-Performance Fiber-Reinforced Grout (UHPFRG) or Ultra-High-Performance Fiber-Reinforced Concrete (UHPFRC), in particular UHPFRG.

A further aspect of the present invention is the use of carbon fibers, in particular micro carbon fibers, provided with a sizing, preferably a polymer sizing, or in form of carbon fiber reinforced polymer lamellas, as fiber reinforcement for grouts or concretes, in particular for Ultra-High-Performance Fiber-Reinforced Grout (UHPFRG) or Ultra-High-Performance Fiber-Reinforced Concrete (UHPFRC).

A further aspect of the present invention is the use of a dry cementitious composition of the invention as described above for the preparation of Ultra-High-Performance Fiber-Reinforced Grout (UHPFRG) or Ultra-High-Performance Fiber-Reinforced Concrete (UHPFRC), in particular for the purpose of grouting of wind turbine towers offshore or onshore or as a repair mortar. The dry cementitious composition of the invention is particularly suitable for the purpose of grouting of wind turbine towers offshore or onshore.

A further aspect of the present invention is the use of a dry cementitious composition of the invention as described above in a system according to principles 3, 4, and 7 of EN 1504-3 or in a system according to EN 1504-6 or as a high strength grout according to DAfStb guideline VeBMR or as a class A, B, C non-shrink grout according to ASTM C1107.

All aspects, proportions and embodiments described above with respect to the inventive dry cementitious composition, e.g. with respect to the carbon fibers, the aggregates and the cementitious binder, also apply to these inventive uses so that reference is made thereto.

DIN EN 1504-3 describes products and systems for the protection and repair of concrete structures. Principle 3 relates to concrete restoration, principle 4 relates to structural strengthening, principle 7 relates to the preservation of restoration of passivity.

A dry cementitious composition according to the invention is thus especially suitable for the use as a mortar for concrete restoration, as well as mortar, concrete or crack filler for structural strengthening, as well as to increase the cover over rebars or to replace carbonated concrete.

EN 1504-6 relates to products and systems to be used for the anchoring of reinforcing steel bars. Cementitious compositions of the present invention are thus suitable to be used for the anchoring of reinforcing steel bars.

Guideline VeBMR of the DAfStb relates to grouting materials with high early strength and compressive strength class C50/60 or higher. The cementitious compositions of the present invention are thus suitable to be used as supplementary concrete material and cement mortar in thin layers, for example for the grouting of joints or the concreting of columns in sleeve foundations.

A further aspect of the present invention is a method for the preparation of a hardened cementitious body, comprising the steps of
- mixing a dry cementitious composition according to the invention as described above with water to obtain a wet cementitious composition,
- shaping or molding the wet cementitious composition, and
- hardening the formed or molded wet cementitious composition.

All aspects, proportions and embodiments described above with respect to the inventive dry cementitious composition, e.g. with respect to the carbon fibers, the aggregates and the cementitious binder, also apply to the inventive method so that reference is made thereto.

The invention is also directed to an Ultra-High-Performance Fiber-Reinforced Grout (UHPFRG) or Ultra-High-Performance Fiber-Reinforced Concrete (UHPFRC), comprising the dry cementitious composition of the invention and water, wherein the amount of water is 5 to 50 wt.-%, preferably 5 to 40 wt.-%, more preferably 6 to 30 wt.-%, still more preferably 6 to 20 wt.-%, most preferably 7 to 10 wt.-%, in each case relative to the total weight of the dry cementitious composition.

Water can be any water available such as distilled water, purified water, tap water, mineral water, spring water, and well water. The use of wastewater is possible only in cases where the composition of such wastewater is known and where none of the impurities comprised may impart the functionality of any other component of the composition of the present invention. The use of salt water is not possible due to its high content of chlorides and the risk of corrosion of steel reinforcement associated therewith.

Methods and devices for mixing a dry cementitious composition with water are known to the person skilled in the art. Mixing of the dry cementitious composition with water can be accomplished, for example, with hand held agitators, Hobart mixers, portable concrete mixers, mixing trucks, mixing buckets, paddle mixers, jet mixers, screw mixers, auger mixers, horizontal single shaft mixers, twin shaft paddle mixers, vertical shaft mixers, ribbon blenders, orbiting mixers, change-can mixers, tumbling vessels, vertical agitated chambers or air agitated operations. Mixing can be continuously, semi-continuously or batchwise. Continuous mixing offers the advantage of a high production speed.

The water used for mixing the dry cementitious composition may comprises at least one additive common in the concrete and/or grout industry, particularly preferably plasticizer or superplasticizer.

The subsequent forming or molding the wet cementitious composition is carried out according to the usual procedures known by the skilled person. The hardening of the dry cementitious composition starts upon the mixing with water, resulting in a hardened cementitious body.

A further aspect of the invention is the hardened cementitious body, obtainable by the method of the invention as described above.

In a preferred embodiment, the hardened cementitious body obtained has a compressive strength of at least 120 MPa, preferably at least 140 MPa, after 28 days, which is determined according to EN 12190.

The hardened cementitious body is preferably a mortar or concrete composition, in particular self-compacting concrete, high-strength or ultra-high strength concrete or high-strength or ultra-high strength mortar.

The hardened cementitious body is particularly preferably an Ultra-High-Performance Fiber-Reinforced Grout (UHPFRG) or Ultra-High-Performance Fiber-Reinforced Concrete (UHPFRC), in particular UHPFRC. UHPFRG and UHPFRC may be considered as grouts or concretes having a compressive strength of at least 120 MPa, preferably at least 140 MPa or even at least 150 MPa, after 28 days, which is determined according to EN 12190.

Despite the absence of the steel fibers usually used in UHPFRG or UHPFRC, the hardened cementitious body obtainable by the dry cement composition according to the invention ensures comparatively good compressive strength with increased corrosion protection and comparatively low weight, which makes the use of the dry cement composition according to the invention particularly easy to handle and versatile.

### Examples

The following Table 1 gives an overview of the materials used.

**Table 1**

| | |
|---|---|
| Cement | CEM I 52.5 R |
| Quartz sand | grain size: 0.2 to 8 mm |
| PA 1 | SupremT (Suprem, CH), Polyamid-12, tex 300; manually cut to a length of 12 mm |
| PA 2 | SupremT (Suprem, CH), Polyamid-12, tex 100; manually cut to a length of 12 mm |
| PA 3 | SupremT (Suprem, CH), Polyamid-12, tex 100; manually cut to a length of 6 mm |
| Steel fibers 1 | Steel fiber 0.25 x 12,5 MP (Metalproducts), dimensions: length: 12.5 mm; diameter: 0.25 mm |
| Steel fibers 2 | Steel fiber 0.20 x 13 wirex AM (ArcelorMittal), dimensions: length: 13 mm; diameter: 0.20 mm |
| Glass fibers 1 | HD 6 mm (Owens Corning), length: 6 mm |
| Basalt fibers | Chopped Basalt fiber D100-2000 L 0,5-40, dimensions: length: 40 mm; diameter: 0.5 mm |
| Carbon fibers 1 | Tenax-J/E STS40 F13 48K. Diam. 7 µm. Manually cut off to Length 12.5 mm. Density TDS: 1.79 g/cc, polyurethane (PU) sizing |
| Carbon fibers 2 | Carbodur E-512/ E-812. Manually cut off up to 12 mm (various diameters-lamellas), epoxy vinyl ester sizing |
| PP/PE fibers | SikaFiber Force-60 PP: 95%, PE: 5%. Manually cut off up to 12 mm |

| | |
|---|---|
| tex: nominal linear density (without sizing) | |

A powder grout composition was prepared with a composition according to following Table 2

**Table 2**

| Raw material name | percent by weight |
|---|---|
| Cement | 35 |
| Silica fume | 4 |
| CaSO₄ | 0.5 |
| Aggregates^{*1} | 60 |
| Additives^{*2} | 0.5 |

| | |
|---|---|
| ^{*1}mixture of quartz sand and bauxite (0 - 3 mm; 2.5:1 by weight) ^{*2}defoamer, plasticizer, stabilizer | |

Examples were prepared by mixing the powder grout composition and fibers in bags before mixing with water with the following procedure: EN 13395-1 Hobart 3'Slow speed+2'Fast speed) to obtain a fiber containing grout composition. The fibers used are given in the following Table 3 where the weight proportion and characteristics of the fibers are also given (cf. below). The lengths given refer to the cut length. Example 1 was carried out without addition of fibers as a reference example. Examples 11 and 12 containing carbon fibers are inventive examples. The other examples are comparative examples.

Mass refers to the mass of the fibers used.

Fraction refers to the weight proportion of the fibers relative to the total weight of the fiber containing grout composition.

Density fiber refers to the density of the fibers.

Volume fiber refers to the volume of the fibers used.

To the fiber containing grout compositions, water was added in an amount sufficient to make 7.5 wt.-% relative to the total weight of the dry fiber containing grout compositions.

The wet compositions thus obtained were measured according to the following procedures.

Tested according to EN 12190.

Slump flow: tested according to EN 13391

FS28: Flexural strength tested according to EN 12190

CS28: Compressive strength measured according to EN 12190 of prisms of 40 x 40 x 160 mm after hardening underwater after 28 days

EMC28: E-Modulus tested according to EN 13412 in compression

N cycles to failure: Fatigue resistance

**Table 3**

| **Ex. No.** | **Fibers** | **Length / (mm)** | **Mass / (g)** | **Fraction / (wt%)** | **Density fiber / (g/cm3)** | **Volume fiber / (cm3)** | **Slump Flow / (mm)** | **FS28 / (MPa)** | **CS28 / (MPa)** | **EMC28 / (GPa) (1 value)** | **N cycles to failure / (load min 20KN/load max 325 KN - 1Hz) (1 value)** |
|---|---|---|---|---|---|---|---|---|---|---|---|
| 1 | No fibers | | | | | | **270** | **20,55** | **126,69** | 5**9,21** | **2374** |
| 2 | PAN carbon 1 | 12 | 74 | 2,96 | 1,4 | 52,8 | 100 | 23,87 | 130,2 | 57,03 | 1 |
| 3 | PAN carbon 2 | 12 | 27 | 1,08 | 1,4 | 19,2 | 218 | 19,36 | 141,96 | 73,32 | 87 |
| 4 | PAN carbon 3 | 6 | 27 | 1,08 | 1,4 | 19,2 | 228 | 23,54 | 139,58 | 58,05 | 112 |
| 5 | PAN carbon 3 | 6 | 14 | 0,56 | 1,4 | 10 | 260 | 21,42 | 144,09 | 71,26 | 708 |
| 6 | Steel fibers 1 | 12 | 149,76 | 5,99 | 7,8 | 19,2 | 229 | 33,18 | 192,32 | 62,03 | 6952 |
| 7 | Steel fibers 2 | 13 | 78 | 3,12 | 7,8 | 10 | 254 | 27,18 | 170,89 | 76,01 | 3619 |
| 8 | Glass fibers 1 | 6 | 26,8 | 1,07 | 2,68 | 10 | 235 | 21,6 | 143,55 | 63 | 4193 |
| 9 | Glass fibers 1 | 6 | 51,45 | 2,06 | 2,68 | 19,2 | 148 | 20,14 | 140,7 | 72,64 | 1938 |
| 10 | Basalt fibers | 40 | 26,7 | 1,07 | 2,67 | 10 | 284 | 18 96 | 139,78 | 74,88 | 2455 |
| 11 | Carbon fibers 1 | 12 | 17,9 | 0,72 | 1,79 | 10 | 255 | 20,5 | 148,4 | 85,11 | 4636 |
| 12 | Carbon fibers 2 | 12 | 17,9 | 0,72 | 1,79 | 10 | 259 | 20,09 | 164,76 | 63,35 | 4801 |
| 13 | PP/PE fibers | 12 | 9,1 | 0,36 | 0,91 | 10 | 266 | 17,93 | 143,9 | 60,56 | 141 |

## Claims

1. A dry cementitious composition comprising, relative to the total dry weight of the cementitious composition,
a) 4 to 80 wt.-%, preferably 10 to 60 wt.-%, more preferably 15 to 50 wt.-% of cementitious binder, preferably Ordinary Portland Cement,
b) 5 to 95 wt.-%, preferably 20 to 80 wt.-%, more preferably 30 to 70 wt.-% of aggregates, wherein the aggregates have a grain size in the range of 0.001 mm to 8 mm, as determined by sieve analysis according to EN 12192-1:2002 or EN 933-1:2012,
c) 0.005 to 5 wt.-%, preferably 0.01 to 4 wt.-%, more preferably 0.1 to 3 wt.-% of carbon fibers provided with a sizing, preferably a polymer sizing, and/or in form of carbon fiber reinforced polymer lamellas.

2. The dry cementitious composition according to claim 1,
wherein the carbon fibers have an aspect ratio in the range of from 0.005 to 25000, preferably from 0.5 to 20000, more preferably from 20 to 15000, still more preferably from 1000 to 5000, and/or
wherein the carbon fibers are micro carbon fibers with a diameter of less than 0.3 mm, and/or
wherein the carbon fibers are chopped carbon fibers or chopped and milled carbon fibers.

3. The dry cementitious composition according to claim 1 or 2, wherein the aggregates are selected from at least one of limestone, granite, basalt, olivine, aluminum oxide, sand or a combination thereof, preferably sand and/or aluminum oxide.

4. The dry cementitious composition according to any one of the preceding claims,
wherein
the carbon fibers have an average length in the range of from 0.001 to 25 mm, preferably from 0.1 to 20 mm, more preferably from 4 to 15 mm, most preferably from 6 to 12 mm, and/or
the carbon fibers have a diameter in the range of 1 to 100 □m.

5. The dry cementitious composition according to any one of the preceding claims,
wherein
the amount of the sizing, preferably the polymer sizing, in the carbon fibers provided with a sizing is in the range of from 0.1 to 10 wt.-%, preferably 0.5 to 5 wt.-%, based on the weight of the carbon fibers, and/or
the amount of polymer in the carbon fiber reinforced polymer lamellas is in the range of from 0.1 to 10 wt.-%, preferably 0.1 to 5 wt.-%, based on the weight of the carbon fibers.

6. The dry cementitious composition according to any one of the preceding claims, wherein the polymer of the sizing, preferably polymer sizing, and/or the reinforced polymer is selected from polyvinyl alcohol, polyvinylpyrrolidone (PVP), polyamide (PA), polyacrylate, polydopamine (PDA), 4,4'-diaminodiphenylmethane (MDA), carbon nanotubes, poly(thioarylene phosphine oxide) (PTPO), N-(404-diaminodiphenylmethane)-2-hydroxypropyl methacrylate (DMHM), (3-glycidyloxypropyl)trimethoxysilan (GPTMS), phenoxy polyhydroxyether, polypropylene, polyethylene, epoxy resin, in particular epoxy vinyl ester, carboxymethyl cellulose, polyurethane, vinyl ester resin or a combination thereof.

7. The dry cementitious composition according to any of the preceding claims, wherein the aggregates have a grain size in the range of 0.036 mm to 7 mm, preferably 0.125 mm to 6 mm, more preferably 0.25 mm to 3 mm.

8. A Ultra-High-Performance Fiber-Reinforced Grout (UHPFRG) or Ultra-High-Performance Fiber-Reinforced Concrete (UHPFRC), comprising the dry cementitious composition according to any of the preceding claims and water, wherein the amount of water is 5 to 50 wt.-%, preferably 5 to 40 wt.-%, more preferably 6 to 30 wt.-%, still more preferably 6 to 20 wt.-%, in particular 7 to 10 wt.-%, in each case relative to the total weight of the dry cementitious composition.

9. Use of carbon fibers, in particular micro carbon fibers, wherein the carbon fibers are provided with a sizing, preferably polymer sizing, or in form of carbon fiber reinforced polymer lamellas as fiber reinforcement for grouts or concretes, in particular for Ultra-High-Performance Fiber-Reinforced Grout (UHPFRG) or Ultra-High-Performance Fiber-Reinforced Concrete (UHPFRC).

10. Use of a dry cementitious composition according to any one of claims 1 to 8 for the preparation of Ultra-High-Performance Fiber-Reinforced Grout (UHPFRG) or Ultra-High-Performance Fiber-Reinforced Concrete (UHPFRC), in particular for the purpose of grouting of wind turbine towers offshore or onshore or as a repair mortar.

11. Use of a dry cementitious composition according to any of claims 1 to 8 in a system according to principles 3, 4, and 7 of EN 1504-3 or in a system according to EN 1504-6 or as a high strength grout according to DAfStb guideline VeBMR or as a class A, B, C non-shrink grout according to ASTM C1107.

12. A method for the preparation of a hardened cementitious body comprising the steps of
- mixing a dry cementitious composition according to any of claims 1 to 7 with water to obtain a wet cementitious composition,
- shaping or molding the wet cementitious composition, and
- hardening the formed or molded wet cementitious composition.

13. The method of claim 12, wherein the amount of water is 5 to 50 wt.-%, preferably 5 to 40 wt.-%, more preferably 6 to 30 wt.-%, still more preferably 6 to 20 wt.-%, in particular 7 to 10 wt.-%, in each case relative to the total weight of the dry cementitious composition.

14. A hardened cementitious body, obtainable by a method according to claim 12 or claim 13.

15. The hardened cementitious body according to claim 14 having a compressive strength of at least 120 MPa, preferably at least 140 MPa, after 28 days according to EN 12190.
